Europäisches Patentamt

European Patent Office

Office européen des brevets

(11) Veröffentlichungsnummer : **0 122 319**
**B1**

# (12) EUROPÄISCHE PATENTSCHRIFT

(45) Veröffentlichungstag der Patentschrift :
28.05.86

(51) Int. Cl.⁴ : **F 16 J 15/32**

(21) Anmeldenummer : **83107998.3**

(22) Anmeldetag : **12.08.83**

(54) **Dichtung.**

(30) Priorität : **17.03.83 DE 3309538**

(43) Veröffentlichungstag der Anmeldung :
**24.10.84 Patentblatt 84/43**

(45) Bekanntmachung des Hinweises auf die Patenterteilung : **28.05.86 Patentblatt 86/22**

(84) Benannte Vertragsstaaten :
**AT BE CH DE FR GB IT LI LU NL SE**

(56) Entgegenhaltungen :
**US-A- 4 131 285**
**US-A- 4 132 421**
**US-A- 4 243 235**

(73) Patentinhaber : **Firma Carl Freudenberg**
**Höhnerweg 4**
**D-6940 Weinheim/Bergstrasse (DE)**

(72) Erfinder : **Fuchs, Dieter**
**Asternweg 8**
**D-6086 Riedstadt-Crumstadt (DE)**
Erfinder : **Ruhland, Hans**
**Ziegelhüttenstrasse 5**
**D-6101 Reichelsheim (DE)**

(74) Vertreter : **Weissenfeld-Richters, Helga, Dr.**
**Höhnerweg 2**
**D-6940 Weinheim/Bergstrasse (DE)**

## Beschreibung

Die Erfindung betrifft eine Dichtung für sich drehende und für hin- und hergehende Maschinenteile, bestehend aus einem Versteifungsring mit winkelförmigem Profil und einem Lippenring, wobei der Lippenring aus PTFE oder einem artverwandten Werkstoff besteht, einen umlaufenden, in Richtung des abgedichteten Mediums vorgezogenen Abschnitt aufweist sowie einen Halteabschnitt, der gegenüber dem nach innen weisenden Tragschenkel des Profils des Versteifungsringes durch eine gummielastische, flüssigkeits- und gasdichte Zwischenschicht festgelegt ist.

Eine solche Dichtung ist aus FR-A 1 338 110 bekannt. Der Halteabschnitt des Lippenringes wird dabei unter Zwischenfügung einer Gummischeibe unverrückbar eingespannt zwischen dem nach innen weisenden Schenkel des aus einem steifen Material bestehenden Andrückringes und dem ebenfalls aus einem steifen Material bestehenden Tragschenkel des Versteifungsringes. Diese Konstruktion ist nicht nur ziemlich aufwendig, sondern darüber hinaus in technischer Hinsicht unbefriedigend.

Durch die starre Festlegung des Halteabschnittes des Lippenringes konzentriert sich seine aus dem Auftreten radialer Wellenschwingungen resultierende Verformung auf einen sehr engen Bereich. Hier kann dadurch schon nach kurzer Zeit eine Überlastung auftreten, und zum Abreißen des die eigentliche Dichtlippe tragenden Bereiches von dem Halteabschnitt führen, was gleichbedeutend ist mit einem völligen Ausfall der Dichtung. Das alleinige Vorhandensein der als Dichtung zwischengelegten Gummischeibe hat hierauf keinen nennenswerten Einfluß.

Der Erfindung liegt die Aufgabe zugrunde, die Dichtung der vorgenannten Art mit dem Ziel einer vereinfachten Fertigung und eines verbesserten Betriebsverhaltens weiter zu entwickeln.

Diese Aufgabe wird erfindungsgemäß bei einer Dichtung der eingangs genannten Art dadurch gelöst, daß der Halteabschnitt, der Tragschenkel und die Zwischenschicht aus einem gummielastischen Werkstoff einstückig verbunden sind, und daß die Zwischenschicht eine Dicke von wenigstens 0,5 mm aufweist und eine Härte Shore A von 65 bis 85.

Bei der vorgeschlagenen Ausführung erübrigt sich somit die Verwendung eines Andrückringes ähnlich FR-A-1 338 110. Statt dessen ist der Lippenring nur durch die Zwischenschicht aus elastischem Werkstoff einstückig mit dem nach innen weisenden Tragschenkel des Versteifungsringes verbunden, was nicht nur eine unlösbare Verbindung zwischen beiden Teilen sicherstellt, sondern darüber hinaus auch eine gute Dichtigkeit der Übergangszone gewährleistet sowie eine besonders gute Nachgiebigkeit der Dichtlippe beim Auftreten radialer Wellenverlagerungen.

Wesentlich für die Erzielung dieses Ergebnisses ist es, daß die Zwischenschicht eine Dicke von wenigstens 0,5 mm aufweist sowie eine Härte Shore A von 65 bis 85. Liegt die Dicke der Zwischenschicht unter dem genannten Wert oder die Härte Shore A oberhalb des beanspruchten Bereiches, dann resultiert eine ähnlich starre Festlegung des Halteabschnittes des Lippenringes wie bei der wenig befriedigenden Ausführung nach FR-A-1 338 110. Übersteigt die Dicke der Zwischenschicht demgegenüber den genannten Wert wesentlich, beispielsweise um mindestens das 20-fache, dann resultiert ebenso wie bei der Verwendung von gummielastischen Werkstoffen einer Härte Shore A von weniger als 65 eine unzureichende Führung des Halteabschnittes des Lippenringes im Versteifungsring, was nach längerer Betriebszeit zur Undichtigkeit der Dichtlippe führen kann. Außerdem ist die Fertigung der Teile unwirtschaftlich.

Der Lippenring der vorgeschlagenen Dichtung besteht aus PTFE oder einem artverwandten Werkstoff, und er wird erhalten durch Ausstanzen einer kreisringförmigen Scheibe aus einer ebenen Warenbahn bzw. durch Abstechen einer kreisringförmigen Scheibe mit planparallelen Oberflächen von einem sich drehenden Hohlzylinder.

Der Innendurchmesser der Scheibe ist kleiner als der des Wellendurchmessers. Die so erhaltenen Scheiben werden hinsichtlich ihrer Abmessungen und hinsichtlich ihrer Oberflächengüte präzisiert und zur Bildung der Dichtlippe mit einer Vorstülpung versehen. Diese ist nicht dimensionsstabil, sondern sie hat wegen des PTFE-eigentümlichen « Memory-Effektes » das Bestreben einer langsamen Rückbildung bis zur Wiedererlangung der ursprünglich ebenen Gestalt. Dieses Bestreben bleibt langfristig erhalten, und es hilft bei der Gewährleistung einer ausreichenden Anpressung der Dichtlippe an die Oberfläche des abzudichtenden Maschinenteiles während der gesamten Gebrauchsdauer.

Dieses Bestreben einer kontinuierlichen Rückstellung des ausgestülpten Teiles wirkt sich auch auf die wenig relaxationsbeständige Zwischenschicht aus einem gummielastischen Werkstoff aus, durch die der Lippenring mit dem Versteifungsring verbunden ist. In Fällen, in denen diese Zwischenschicht eine zu große Nachgiebigkeit aufweist, können Deformierungen auftreten, die zu einer Veränderung des Anstellwinkels der Dichtlippe an die Oberfläche der abgedichteten Welle führen. Ein unbefriedigendes Abdichtungsergebnis wäre die Folge.

Die den Lippenring mit dem Versteifungsring verbindende Zwischenschicht besteht aus einem elastischen Werkstoff, bevorzugt aus Gummi. Sie kann mit dem Lippenring und/oder dem Versteifungsring verklebt sein, was allerdings eine separate Herstellung erfordert. Unter wirtschaftlichen Gesichtspunkten hat es sich deshalb als günstiger erwiesen, die Zwischenschicht im Zuge eines unmittelbaren Anformungsvorganges zu erzeugen und gleichzeitig durch Vulkanisation mit dem Versteifungsring und dem Lippenring zu verbinden.

Ein günstiger Bereich für die Dicke der Schicht beträgt 0,7 bis 3 mm, bevorzugt 0,9 bis 1,4 mm. Die Härte der Schicht beträgt vorzugsweise 70 bis 80 Shore A, das Verhältnis der Erstreckung in radialer Richtung und der Dicke vorzugsweise 3-7. Der gummielastische Werkstoff des Zwischenringes kann neben der Anbindung des Lippenringes an den Versteifungsring auch zur Ausbildung einer Schutzlippe auf der dem abgedichteten Medium abgewandten Seite der Dichtlippe verwendet werden. Der zylindrische Außenmantel des Trägerteils kann zur besseren Abdichtung in der Bohrung mit dem gummielastischen Werkstoff überzogen sein.

Der Lippenring der vorgeschlagenen Dichtung kann in bezug auf eine Verwendung als Radialwellendichtring mit hydrodynamisch wirkenden Rückförderelemten versehen werden, beispielsweise mit einer oder mit mehreren auf dem Umfang verteilten Drallrippen und/oder Drallnuten. Diese können auf jeder der beiden die Dichtlippe begrenzenden Kegelflächen angeordnet sein, somit sowohl auf der dem abgedichteten Medium zugewandten als auch auf der der Außenluft zugewandten Kegelfläche.

Daneben läßt sich die Dichtung bei entsprechender Ausbildung sowohl als Kolben- als auch als Stangendichtung verwenden und gewährleistet hier ausgezeichnete Abdichtungsergebnisse. Im Bereich der Dichtungszone können in diesem Falle gegebenenfalls auch mehrere koaxial hintereinander angeordnete Dichtlippen vorgesehen werden, wie aus dem Stande der Technik vielfach bekannt.

In den in der Anlage beigefügten Zeichnungen sind einige beispielhafte Ausführungen der vorgeschlagenen Dichtung in halbgeschnittener Darstellung wiedergegeben.

Es zeigen:

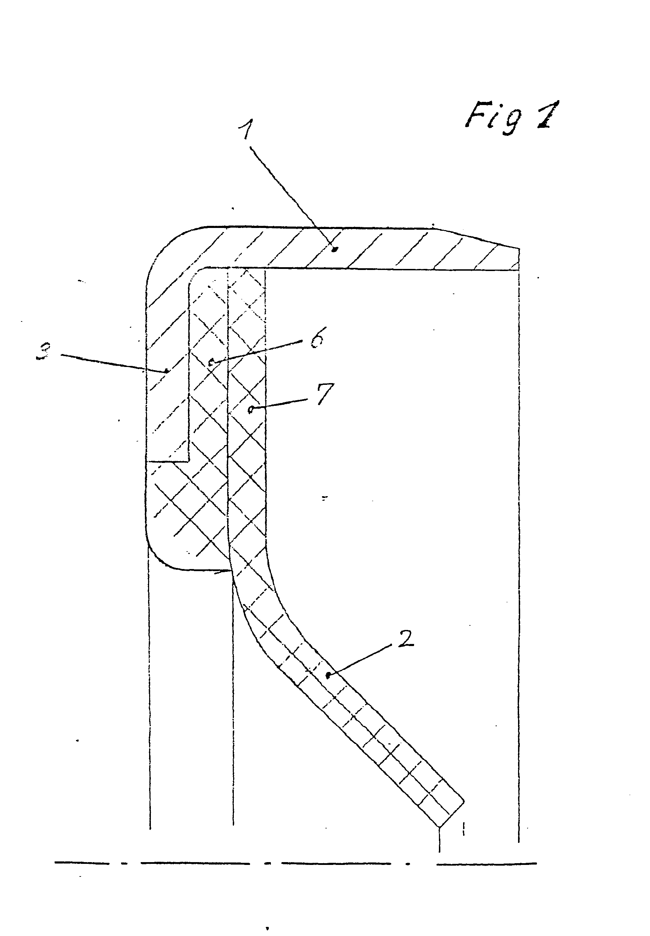

Figur 1 eine einfache Ausführung der Dichtung.

Figur 2 die durch eine Schutzlippe ergänzte Ausführung nach Figur 1.

Figur 3 die durch eine den Versteifungsring außenseitig überziehende Beschichtung aus Gummi ergänzte Ausführung nach Figur 1.

Figur 4 eine Ausführung mit den zusammengefaßten Merkmalen aus Figur 2 und 3.

Die dargestellten Ausführungen enthalten einen Versteifungsring 1 mit winkelförmigem Profil und einem in radialer Richtung nach innen weisenden Schenkel 3. Der Versteifungsring besteht aus Stahlblech.

Mit dem in radialer Richtung nach innen weisenden Schenkel 3 ist der Halteabschnitt 7 des Lippenringes 2 durch die Zwischenschicht 6 aus gummielastischem Werkstoff verbunden. Die sich beim Auftreten radialer Wellenverlagerungen ergebenden Deformierungen des Lippenringes 2 werden dadurch auf einen großen Bereich verteilt und in ihrer spezifischen Wirksamkeit erheblich abgeschwächt. Eine die sichere Funktion beeinträchtigende Überlastung des Lippenringes ist bei der vorgeschlagenen Ausführung nicht mehr zu befürchten. Der Lippenring 2 besteht aus PTFE.

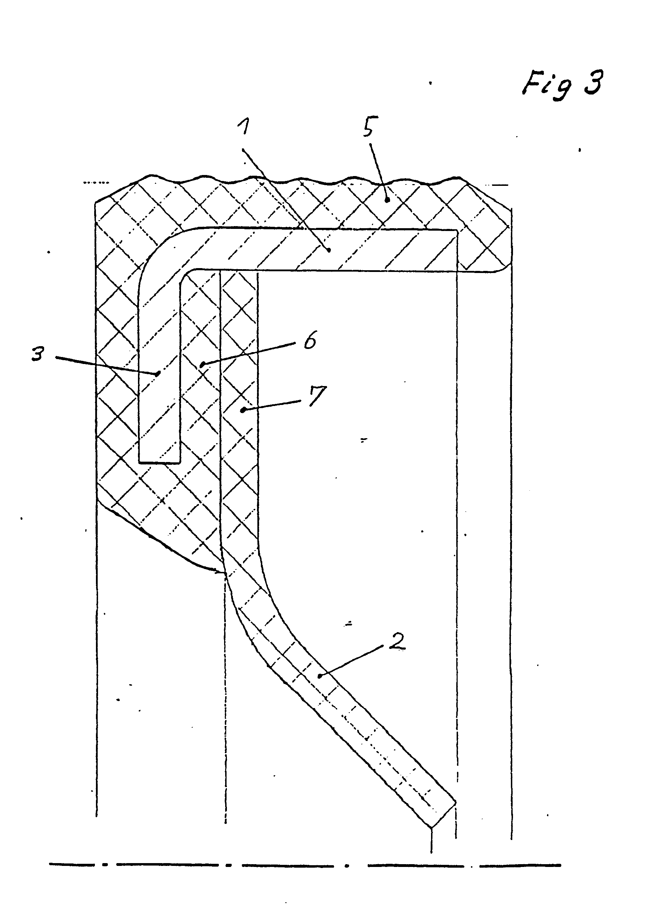

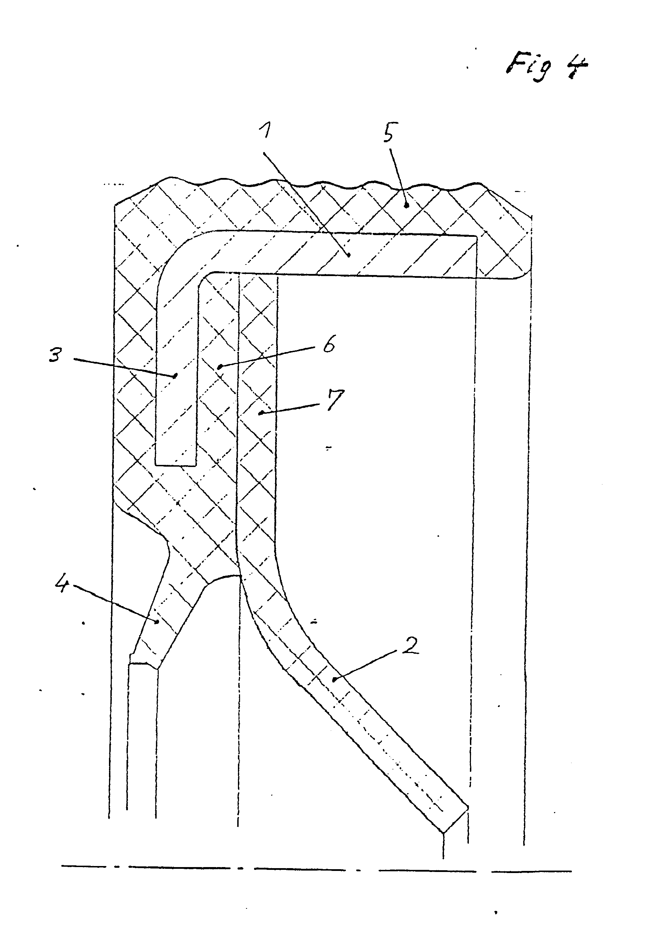

Die den Halteabschnitt 7 mit dem Tragschenkel 3 verbindende Zwischenschicht 6 aus Gummi umschließt den Versteifungsring bei den Ausführungen nach Figur 3 und Figur 4 auf der Außenseite als eine durchgehende Schicht 5.

Der Versteifungsring erhält hierdurch einen zusätzlichen Korrosionsschutz und wird durch die axial hintereinander angeordneten Rippen zuverlässig abgedichtet auch in bezug auf einen Einbau in geteilten Gehäusen.

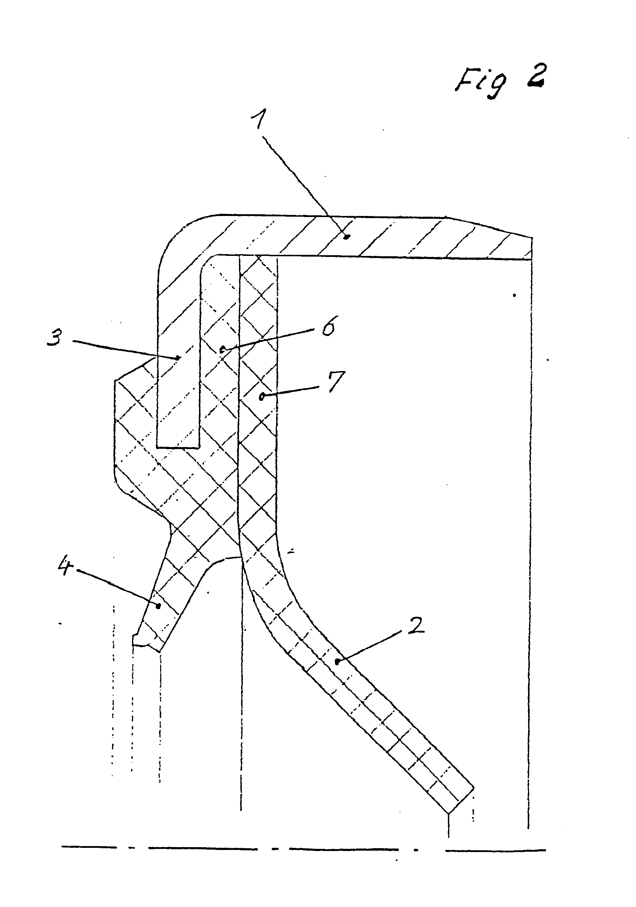

Die Schicht ist bei den Ausführungen nach Figur 2 und Figur 4 auf der Außenseite des Versteifungsringes im inneren Bereich zu einer umlaufenden Schutzlippe 4 vorgezogen, die unter einer elastischen Vorspannung an dem nicht gezeigten, abzudichtenden Maschinenteil anliegt. Die Schutzlippe verhindert eine Beaufschlagung des die eigentliche Dichtfunktion übernehmenden Lippenringes 2 mit abrasiv wirkenden Substanzen.

Die beschriebene Ausführung eignet sich beispielsweise gut für die Abdichtung der Kurbelwelle eines Verbrennungsmotors. Die sich hier bei jeder Umdrehung ergebenden radialen Verlagerungen der dynamisch abgedichteten Zone haben keinen Einfluß auf das gute Abdichtungsergebnis, was im wesentlichen auf die flexible Befestigung des Lippenringes an dem Haltering zurückzuführen ist.

Diese vereint in sich durch die nicht druckbeanspruchte Festlegung des bedingt plastisch umgeformten Lippenringes aus PTFE über seinem Halteabschnitt an einer rückseitig ausgesteiften Schicht aus Gummi einer definierten Dicke und Härte eine gute Führung der Dichtlippe mit großer Flexibilität und Elastizität.

**Patentansprüche**

1. Dichtung für sich drehende und für hin- und hergehende Maschinenteile, bestehend aus einem Versteifungsring (1) mit winkelförmigem Profil und einem Lippenring (2), wobei der Lippenring (2) aus PTFE oder einem artverwandten Werkstoff besteht, einen umlaufenden, in Richtung des abgedichteten Mediums vorgezogenen Abschnitt aufweist sowie einen Halteabschnitt (7), der gegenüber dem nach innen weisenden Tragschenkel (3) des Profils des Versteifungsringes (1) durch eine gummielastische, flüssigkeits- und gasdichte Zwischenschicht (6), festgelegt ist, dadurch gekennzeichnet, daß der Halteabschnitt (7), der Tragschenkel (3) und die Zwischenschicht (6) einstückig verbunden sind, daß die Schicht eine Dicke von wenigstens 0,5 mm bis höchstens 10 mm aufweist und eine Härte Shore A von 65 bis 85.

2. Dichtung nach Anspruch 1, dadurch gekennzeichnet, daß der Halteabschnitt (7), der Tragschenkel (3) und die Zwischenschicht (6) durch Vulkanisation verbunden sind.

3. Dichtung nach Anspruch 1 bis 2, dadurch gekennzeichnet, daß die Zwischenschicht (6) eine Dicke von 0,7 bis 3,0 mm aufweist.

4. Dichtung nach Anspruch 1 bis 3, dadurch gekennzeichnet, daß die Zwischenschicht (6) eine Dicke von 0,9 bis 1,4 mm aufweist.

5. Dichtung nach Anspruch 1 bis 4, dadurch gekennzeichnet, daß die Zwischenschicht (6) eine Härte Shore A von 70 bis 80 aufweist.

6. Dichtung nach Anspruch 1 bis 5, dadurch gekennzeichnet, daß die gesamte Fläche des Tragschenkels 3 für die Anbindung des PTFE-Lippenringes (2) genutzt wird.

## Claims

1. An oil seal for rotating and reciprocating machine parts, comprising a reinforcing ring (1) having an angular profile and a lip ring (2), the lip ring (2) being made of PTFE or a generically related material and having an encircling section drawn forward in the direction of the sealed medium as well as a retaining section (7) which is secured relative to the inwardly directed support leg (3) of the profile of the reinforcing ring (1) by a rubber-elastic, fluid-tight and gastight intermediate layer (6), characterised in that the retaining section (7), the support leg (3) and the intermediate layer (6) are connected in one piece, and that the layer has a thickness of at least 0.5 mm up to a maximum of 10 mm and a shore A hardness of 65 to 85.

2. An oil seal according to claim 1, characterised in that the retaining section (7), the support leg (3) and the intermediate layer (6) are connected by vulcanisation.

3. An oil seal according to claim 1 or 2, characterised in that the intermediate layer (6) has a thickness of 0.7 to 3.0 mm.

4. An oil seal according to any of claims 1 to 3, characterised in that the intermediate layer (6) has a thickness of 0.9 to 1.4 mm.

5. An oil seal according to any of claims 1 to 4, characterised in that the intermediate layer (6) has a shore A hardness of 70 to 80.

6. An oil seal according to any of claims 1 to 5, characterised in that the entire surface of the support leg (3) is used for bonding the PTFE lip ring (2).

## Revendications

1. Joint d'étanchéité pour pièces de machines rotatives et en mouvement alternatif, constitué d'une bague raidisseuse (1) à profil angulaire et d'une bague à lèvre (2), la bague à lèvre (2) étant réalisée en PTFE ou en matériau de nature analogue, et présentant un segment s'étendant sur la périphérie en direction du fluide à contenir de manière étanche, ainsi qu'un segment de maintien (7) qui est fixé par une couche intermédiaire (6) en caoutchouc élastique étanche aux liquides et aux gaz par rapport à la branche portante (3) tournée vers l'intérieur du profil de la bague raidisseuse (1), caractérisé en ce que le segment de maintien (7), la branche portante (3) et la couche intermédiaire (6) sont reliés pour ne former qu'une pièce, en ce que la couche présente une épaisseur d'au moins 0,5 mm et d'au plus 10 mm et une dureté Shore-A de 65 à 85.

2. Joint d'étanchéité selon la revendication 1, caractérisé en ce que le segment de maintien (7), la branche portante (3) et la couche intermédiaire (6) sont reliés par vulcanisation.

3. Joint d'étanchéité selon les revendications 1 et 2, caractérisé en ce que la couche intermédiaire (6) présente une épaisseur de 0,7 à 3 mm.

4. Joint d'étanchéité selon les revendications 1 à 3, caractérisé en ce que la couche intermédiaire (6) présente une épaisseur de 0,9 à 1,4 mm.

5. Joint d'étanchéité selon les revendications 1 à 4, caractérisé en ce que la couche intermédiaire (6) présente une dureté Shore-A de 70 à 80.

6. Joint d'étanchéité selon les revendications 1 à 5, caractérisé en ce que toute la surface de la branche portante (3) est utilisée pour la fixation de la bague à lèvres (2) en PTFE.

Fig 1

Fig 2

Fig 3

Fig 4